# FASCICULE DE BREVET EUROPEEN

(11) **EP 1 386 085 B1**
(45) Date de publication et mention de la délivrance du brevet: **16.11.2005**
(21) Numéro de dépôt: 02735483.6
(22) Date de dépôt: 23.04.2002
(51) Int. Cl.: F15B 15/19

(54) **MICROACTIONNEURS PYROTECHNIQUES POUR MICROSYST MES.**
PYROTECHNISCHE MIKROSTELLGLIEDER FÜR MIKROSYSTEME
PYROTECHNIC MICROACTUATORS FOR MICROSYSTEMS

(30) Priorité: 27.04.2001 FR 0105715; 31.05.2001 FR 0107142
(43) Date de publication de la demande: 04.02.2004
(73) Titulaire: SNPE Matériaux Energétiques, 75181 Paris Cedex 04 (FR)
(72) Inventeur: PERUT, Christian, F-77310 St Fargeau Ponthierry (FR); ROLLER, Denis, F-91590 La Ferte Alais (FR)
(86) Numéro de dépôt international: PCT/FR2002/001382
(87) Numéro de publication internationale: WO 2002/088551

(56) Documents cités:
- WO-A-98/22719
- US-A- 3 483 695
- US-A- 4 111 221
- US-A- 5 370 147
- US-A- 6 160 243

## Description

Le domaine technique de l'invention est celui des microactionneurs destinés à remplir des fonctions mécaniques, chimiques, électriques, thermiques ou fluidiques dans des microsystèmes, pour des applications microélectroniques comme les puces, ou biomédicales comme les cartes d'analyse intégrant la microfluidique ou synthèse chimique comme les microréacteurs.

Les microactionneurs sont des objets miniaturisés, usinés dans des supports solides pouvant être semiconducteurs ou isolants, dans le but de former des microsystèmes comme, par exemple, des microvannes ou des micropompes dans des microcircuits de fluide, ou des microinterrupteurs dans des microcircuits électroniques.

Des microactionneurs utilisant des effets électrostatique, piézoélectrique, électromagnétique et bimétallique existent depuis quelques temps déjà. Une nouvelle génération de microactionneur commence à faire son apparition : ceux utilisant l'effet pyrotechnique. A ce sujet, le brevet WO 98/24719 décrit une vanne miniature pour le remplissage du réservoir d'un appareil d'administration transdermique. Le principe de fonctionnement de cette vanne repose sur la fragmentation d'un substrat provoqué par les gaz de combustion d'une charge pyrotechnique, ledit substrat séparant initialement une réserve de fluide et un réservoir vide. Cette microvanne peut, selon une autre variante de réalisation de l'invention, être utilisée avec une enveloppe gonflable. Les gaz de combustion provoquent d'abord la rupture du substrat puis le gonflement de l'enveloppe dans le but de pousser un fluide afin de l'évacuer. Ces microvannes présentent le double inconvénient d'émettre des fragments de substrat dans le microcircuit et de mélanger les gaz de combustion avec le fluide qu'elles sont censées libérer.

De façon générale, les microactionneurs qui interviennent dans les microcircuits doivent être performants au niveau des forces qu'ils délivrent, conserver un encombrement réduit et demeurer une entité entière et autonome durant leur fonctionnement, sans possibilité de se morceler pour éviter d'émettre des particules dans le microcircuit dans lequel ils sont intégrés, et sans possibilité de voir les gaz de combustion polluer ledit microcircuit. Dans le cas d'un microcircuit de fluide, l'apport de la pyrotechnie permet aux microactionneurs d'engendrer des forces de pression 100 à 1000 fois plus élevées que celles produites par des microactionneurs fonctionnant à partir d'une source piézoélectrique ou électrostatique. De plus, les gaz émis par la combustion de la charge pyrotechnique peuvent également servir à chauffer un fluide ou une partie d'un micromécanisme sans se mélanger à lui. Un exemple d'actionneur pyrotechnique selon l'état de la technique est representé dans le document US 4 111 221.

Les microactionneurs selon l'invention répondent à ces trois exigences.

L'objet de la présente invention concerne un microactionneur, comprenant une chambre réalisée dans un support solide et contenant une charge pyrotechnique, caractérisé en ce que la chambre est délimitée partiellement par une membrane déformable, de sorte que les gaz émis par la combustion de la charge pyrotechnique permettent d'accroître le volume de ladite chambre par déformation de ladite membrane, tout en maintenant intactes les parois solides de la chambre, caractérisé en ce que la charge pyrotechnique est déposée sur un conducteur chauffant et a une épaisseur de dépot inférieure à 200 µm.

Autrement dit, les gaz émis par la combustion de la charge pyrotechnique sont sans aucune influence sur la géométrie de la partie solide de la chambre, que ce soit par déformation des parois ou par fragmentation de celles-ci.

Ces microactionneurs peuvent à eux seuls assurer des fonctions au sein d'un microcircuit, comme par exemple, exercer une pression sur un fluide pour contribuer à le déplacer pour l'évacuer, ou bien fermer une canalisation de fluide par déformation de la membrane, mais ils sont plus généralement destinés à être inclus dans des microsystèmes.

Un microsystème est un dispositif multifonctionnel miniaturisé dont les dimensions maximales n'excèdent pas quelques millimètres. Dans le cadre d'un microcircuit de fluide un microsystème peut, par exemple, être une microvanne ou une micropompe, et dans le cadre d'un microcircuit électronique un microinterrupteur ou un microcommutateur. Les microactionneurs sont réalisés dans des supports semiconducteurs, comme ceux en silicium par exemple, lorsqu'il s'agit d'une application microélectronique. Ils peuvent être conçus dans d'autres matériaux, comme du polycarbonate, pour d'autres applications et notamment dans le domaine biomédical. La conformation de la chambre est telle, que sous l'effet des gaz émis par la combustion de la charge pyrotechnique, elle accroît son volume. La chambre peut contenir plusieurs charges pyrotechniques, non pas dans le but d'augmenter la pression interne de ladite chambre au moyen d'un allumage simultané desdites charges, mais de façon à maintenir un niveau de pression à peu près constant dans le temps, pour pallier une éventuelle relaxation prématurée de la chambre, notamment dans le cas des micropompes. Dans ce cas, l'initiation des charges s'effectue de façon séquentielle, à des intervalles de temps prédéterminés. Préférentiellement, ladite chambre définit un espace hermétique une fois qu'elle s'est expansée. Autrement dit, une fois la combustion terminée, la chambre demeure dans une configuration correspondant à un état d'expansion maximum.

De façon avantageuse, la charge pyrotechnique est constituée par une composition à base de nitrocellulose. En effet, en raison de la très petite taille des charges pyrotechniques utilisées, leur masse n'excédant pas quelques microgrammes, il est particulièrement souhaité d'employer des compositions homogènes.

Selon un autre mode de réalisation préféré de l'invention, la charge pyrotechnique est constituée par du polyazoture de glycidyle.

De façon préférentielle, le volume de la chambre est inférieur à 1 cm³. Avantageusement, la densité de chargement qui est le rapport de la masse de la charge pyrotechnique sur le volume de la chambre est compris entre 0,01 µg/mm³ et 0,1 mg/mm³. Pour un volume de chambre donné, il est tout à fait possible de définir une charge pyrotechnique en terme de masse, géométrie et composition, apte à produire une énergie donnée.

Selon un premier mode de réalisation préféré de l'invention, la charge pyrotechnique est déposée sur une piste conductrice chauffante et a avantageusement une épaisseur de dépôt inférieure à 200 µm.

Selon un second mode de réalisation préféré de l'invention, la charge pyrotechnique enrobe un fil conducteur chauffant traversant la chambre, le diamètre dudit fil étant compris entre 10 µm et 100 µm. Bien que ces deux modes d'initiation permettent dans la plupart des cas l'allumage de la charge pyrotechnique, il a quand même été constaté dans certaines configurations un problème lié à des pertes thermiques par conduction, dû à la mise au contact de l'élément conducteur chauffant avec le support, ces pertes nécessitant un surcroît d'énergie pour parvenir à l'allumage de la charge, s'accompagnant généralement d'un réchauffement significatif du microactionneur non souhaitable systématiquement. Donc, selon un troisième mode de réalisation préféré de l'invention, la piste conductrice chauffante est déposée sur la charge pyrotechnique au moyen de techniques largement éprouvées dans le domaine des microcircuits comme, par exemple, le dépôt d'une peinture ou d'un encre conductrice par sérigraphie ou jet d'encre, de façon à éviter tout contact direct entre ladite piste chauffante et le substrat. Selon un quatrième mode de réalisation préféré de l'invention, la chambre comporte une cavité creusée dans le support et ladite charge pyrotechnique se présente sous la forme d'un film recouvrant ladite cavité de façon, là aussi, à réduire voire à éliminer les pertes thermiques par conduction, en isolant la charge pyrotechnique de tout support solide conducteur de chaleur. Pour cette dernière configuration, on peut utiliser des matériaux énergétiques possédant une capacité filmogène comme, par exemple, le collodion.

Mais la configuration optimisée pour résoudre au mieux le problème lié aux pertes thermiques par conduction, consiste à déposer la charge pyrotechnique sous forme de film sur une cavité du support et à assurer son initiation par une piste conductrice chauffante elle-même déposée sur ladite charge. Par ce biais, les contacts directs entre la piste chauffante et le support sont nuls et ceux entre la charge et ledit support sont quasi-inexistants.

En raison de la miniaturisation de la charge pyrotechnique, son système d'initiation doit lui-même être d'encombrement réduit, tout en demeurant d'une grande fiabilité. De façon plus générale, il est également possible d'initier la charge pyrotechnique par d'autres moyens, et notamment ceux impliquant soit un cristal piézoélectrique, soit un rugueux, à condition qu'ils répondent à la double exigence de miniaturisation et de fiabilité, soit par un faisceau laser, l'énergie pyrotechnique par un guide d'onde ou une fibre optique.

Préférentiellement, la chambre est délimitée partiellement par une membrane souple susceptible de se gonfler sous l'effet des gaz émis par la charge pyrotechnique. Suivant les besoins liés à l'utilisation de l'actionneur, la membrane peut présenter des propriétés d'extensibilité plus ou moins marquées.

Selon un autre mode de réalisation préféré de l'invention, la chambre est délimitée partiellement par une membrane souple repliée dans ladite chambre, ladite membrane étant apte à se déplier sous l'effet des gaz émis par la charge pyrotechnique. Selon les configurations, la membrane peut être soit repliée sur elle-même, soit être repliée dans la chambre. De façon avantageuse, une fois que la membrane s'est dépliée sous l'effet des gaz, le volume final de la chambre est supérieur à son volume initial. De façon préférentielle, la membrane est en téflon. Avantageusement, pour des applications microélectroniques, la membrane peut être entièrement ou partiellement recouverte d'un matériau conducteur.

L'invention porte également sur un microsystème incluant un microactionneur selon l'invention caractérisé en ce que la déformation de la membrane provoque le déplacement d'une pièce solide. En effet, les gaz émis par la combustion de la charge pyrotechnique créent une surpression dans la chambre qui va avoir tendance à s'expanser par déformation de la membrane. La membrane vient alors au contact d'une pièce placée à proximité du microactionneur et lorsque les forces de pression atteignent une valeur seuil, elles provoquent le déplacement de ladite pièce.

Selon un premier mode de réalisation préféré d'un microsystème selon l'invention, la pièce solide est susceptible de venir obstruer une canalisation de fluide, suite au pivotement de ladite pièce sous l'effet des gaz de combustion. Pour cette configuration où le microactionneur est utilisé dans le cadre d'un microcircuit de fluide, le microsystème peut être assimilé à une microvanne à fermeture.

Selon un deuxième mode réalisation préféré de l'invention, la pièce solide obstrue une canalisation de fluide et le déplacement de ladite pièce par pivotement entraîne l'ouverture de ladite canalisation. Pour cette configuration, le microsystème peut être assimilé à une microvanne d'ouverture.

Selon un troisième mode de réalisation préféré de l'invention,
i) une membrane souple est située dans un espace annulaire assimilable à une gorge,
ii) la charge pyrotechnique est située dans un espace annulaire assimilable à une gorge de plus petite dimension que celle dans laquelle est située la membrane souple et positionnée de façon concentrique par rapport à celle-ci, les deux gorges communiquant entre elles par au moins une ouverture,
iii) Une pièce solide plate vient en appui contre le support en coiffant l'espace annulaire dans lequel est situé la membrane souple, ladite pièce étant elle-même recouverte par une membrane élastique et obstruant une canalisation de fluide,
de sorte que les gaz émis par la combustion de la charge entraînent le déploiement de la membrane souple située dans l'espace annulaire et provoquent le déplacement de la pièce plate, en induisant une aspiration de fluide dans l'espace que la membrane élastique crée en s'éloignant du support.

Pour cette configuration, le microsystème peut être assimilé à une micropompe à dépression et l'utilisation de plusieurs charges pyrotechniques à allumage séquentiel peut apparaître comme particulièrement appropriée, de façon à maintenir un niveau de pression seuil minimum pendant un certain temps, et donc éviter un reflux naturel prématuré du fluide.

Selon un quatrième mode de réalisation préféré de l'invention, la membrane se déforme sous l'effet des gaz de combustion pour venir obturer une canalisation de fluide. Avantageusement, la chambre est partiellement délimitée par une membrane bistable, de sorte que, ladite membrane, initialement concave, devient convexe sous l'effet des gaz émis par la charge. Pour cette configuration, le microsystème, qui joue le rôle d'une microvanne à fermeture, ne déplace aucune pièce et se confond avec le microactionneur. Avantageusement, l'élément qui vient obstruer la canalisation de fluide, que ce soit la pièce solide plate ou la membrane bistable, est surmonté d'une protubérance souple pour assurer une bonne étanchéité au niveau de la fermeture de ladite canalisation, ladite protubérance étant assimilable à un bouchon.

Le microactionneur selon l'invention peut être utilisé dans des microcircuits électroniques en contribuant à la réalisation de microsystèmes tels que des microinterrupteurs ou des microcommutateurs. En effet, la membrane qui délimite partiellement la chambre et qui est recouverte entièrement ou partiellement d'un matériau conducteur peut se gonfler ou se déployer de manière à venir fermer ou ouvrir un microcircuit électrique. De même, le microactionneur selon l'invention munie d'une membrane souple non conductrice, peut déplacer une pièce solide conductrice de manière à fermer ou ouvrir un microcircuit électrique ou assurer la double fonction consistant d'abord à ouvrir un microcircuit électrique puis, ensuite, à en fermer un autre.

Les microactionneurs pyrotechniques selon l'invention ont l'avantage d'être performants et fiables tout en restant propres. Ils sont propres à deux titres ; d'abord, ils demeurent intacts durant toute leur phase de fonctionnement sans risque d'être fragmentés, évitant de libérer des particules solides parasites dans le microcircuit, ensuite, les gaz émis par la charge pyrotechnique sont emprisonnés dans la chambre qui délimite un espace hermétique, sans aucune possibilité d'envahir le microcircuit. De plus, les microactionneurs pyrotechniques selon l'invention sont simples. Une chambre avec membrane, une charge pyrotechnique et un système d'allumage sont leurs seuls éléments constitutifs et les phénomènes physico-chimiques qu'ils engendrent restent basiques.

Enfin, pour un volume de chambre donné, la grande variabilité des compositions pyrotechniques pouvant être intégrées dans les microactionneurs selon l'invention, permet d'obtenir une gamme très étendue de sollicitations, qui le rend adaptable à un grand nombre de configurations.

On donne ci-après une description détaillée d'un mode de réalisation préféré d'un microactionneur selon l'invention ainsi que de trois modes de réalisation préférés d'un microsystème utilisant un microactionneur selon l'invention, en se référant aux figures 1 à 7.

La figure 1 est une vue en coupe axiale longitudinale d'un microactionneur selon l'invention.

La figure 2 est une vue en coupe axiale longitudinale d'une microvanne de fermeture fonctionnant à partir d'un microactionneur pyrotechnique selon l'invention.

La figure 3 est une vue du dessus du clapet de fermeture de la microvanne de la figure 2.

La figure 4 est une vue en coupe axiale longitudinale d'une microvanne d'ouverture fonctionnant à partir d'un microactionneur pyrotechnique selon l'invention.

La figure 5 est une vue en coupe selon le plan V-V de la microvanne d'ouverture de la figure 4.

La figure 6 est une vue en coupe axiale longitudinale d'une microvanne de fermeture utilisant un microactionneur pyrotechnique selon l'invention munie d'une membrane bistable.

La figure 7 est une vue en coupe axiale longitudinale d'une micropompe utilisant un microactionneur pyrotechnique selon l'invention, ledit microactionneur n'ayant pas encore fonctionné.

La figure 8 est une vue du dessus de la pièce plate solide à déplacer et appartenant à la micropompe présentée à la figure 7.

La figure 9 est une vue en coupe axiale longitudinale de la micropompe de la figure 7, le microactionneur ayant fonctionné.

La figure 10 est une vue en coupe axiale longitudinale d'une seconde variante de réalisation d'une micropompe utilisant un microactionneur selon l'invention, ledit microactionneur ayant fonctionné.

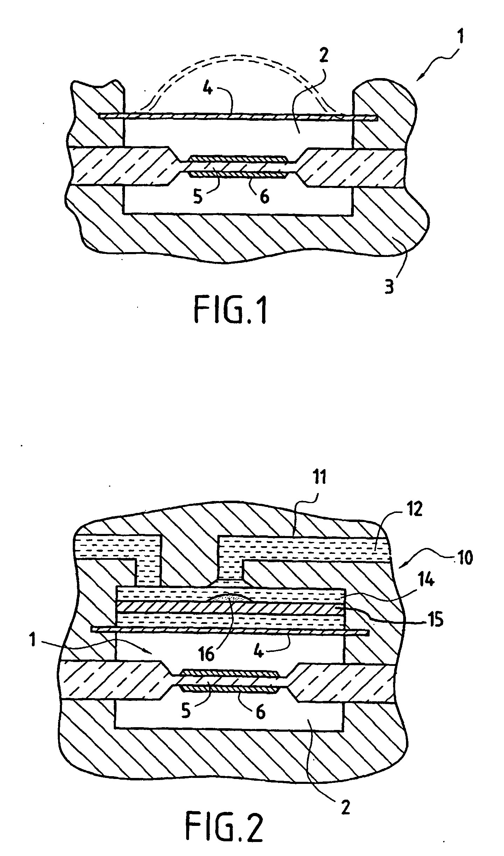

En se référant à la figure 1 un microactionneur 1 selon l'invention comprend une chambre 2 réalisée dans un support 3 en polycarbonate et ayant une forme cylindrique. Ledit support 3 résulte d'un empilement de feuilles en polycarbonate collées les unes aux autes. Ladite chambre 2 qui est donc délimitée par le support 3 présente une face circulaire obturée par une membrane 4 souple en téflon, fixée dans ledit support 3. Ladite chambre 2 est traversée par un fil chauffant 5 enrobé d'une couche de composition pyrotechnique 6 à base de nitrocellulose.

Le mode de fonctionnement de cet actionneur 1 est le suivant. Un courant électrique est délivré dans le fil chauffant 5 dont la température s'élève jusqu'à atteindre la température d'inflammation de la composition pyrotechnique 6. La combustion de ladite composition 6 entraîne la production de gaz qui créent une surpression dans la chambre 2. La membrane 4 qui est ainsi sollicitée réagit en se gonflant.

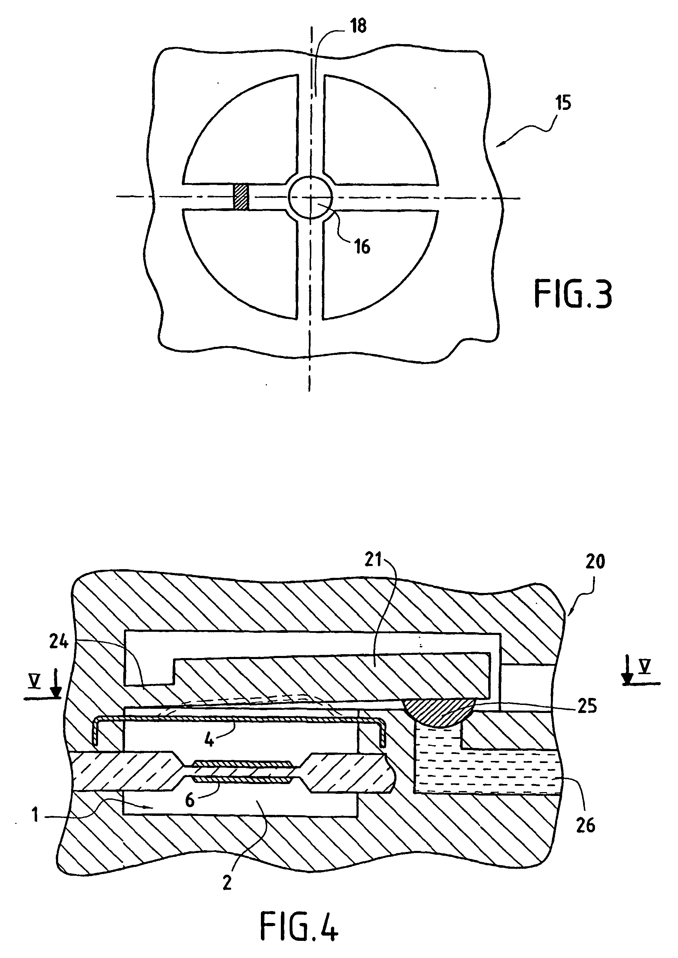

En se référant à la figure 2, une microvanne de fermeture 10 est réalisée dans un support en polycarbonate et comprend un microactionneur 1 analogue à celui décrit au paragraphe précédent et situé à proximité d'un micro- circuit de fluide 11 caractérisé par une canalisation 12 rectiligne traversant une chambre cylindrique 14 située dans le prolongement de la chambre cylindrique 2 du microactionneur 1, et ayant approximativement le même diamètre, les deux chambres 2,14 étant séparées l'une de l'autre par la membrane 4 du microactionneur 1. La chambre 14 qui est traversée par la canalisation 12 est remplie de fluide et contient un clapet 15 de fermeture. En se référant à la figure 3, le clapet 15 est constitué par une pièce arrondie 16 soutenue par quatre colonnes 18 en polycarbonate entre lesquelles circule le fluide, lesdites colonnes 18 reposant sur la membrane 4. Ladite pièce 16 arrondie qui est réalisée en matériau souple, comme du caoutchouc, n'est donc pas en contact directe avec la membrane 4. Le volume de la chambre 2 est de 0,3 cm³ et la masse, de la charge pyrotechnique 6 est de 0,5 µg.

Le mode de fonctionnement de cette microvanne 10 de fermeture est le suivant. La mise à feu de la charge pyrotechnique 6 entraîne une surpression dans la chambre 2 qui provoque alors le déplacement en translation du clapet 15 dans la chambre 14 remplie de fluide. Ce déplacement s'effectue jusqu'à ce que la pièce souple 16 vienne s'encastrer dans la canalisation 12 interrompant la circulation de fluide. La partie de la canalisation destinée à recevoir la pièce souple 16 est légèrement évasée de façon à assurer une fermeture étanche de la canalisation. Une fois la combustion de la charge pyrotechnique 6 terminée, le clapet 15 ne revient pas à sa position initiale, puisque la chambre 2 définit un espace hermétique.

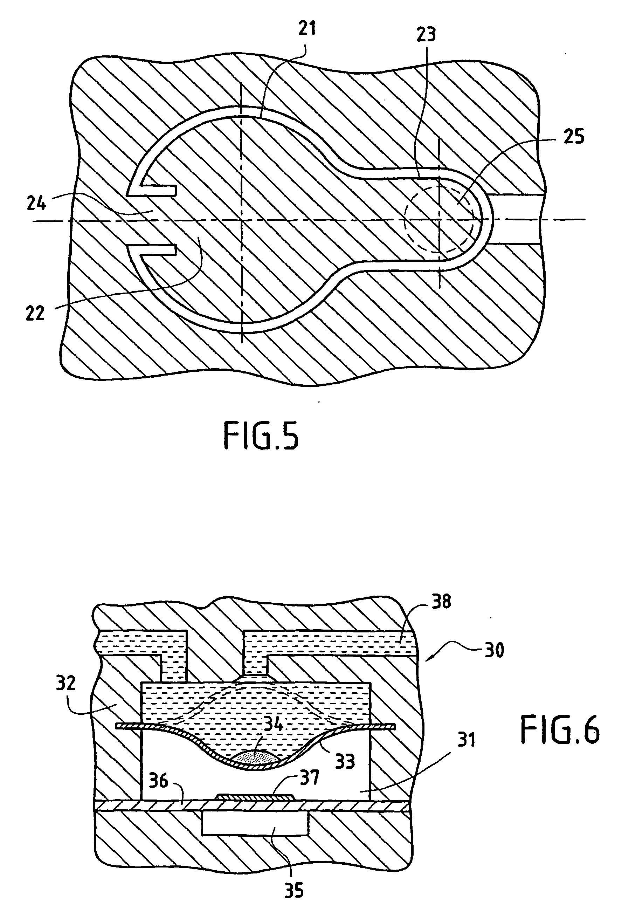

En se référant à la figure 4, une microvanne d'ouverture 20 est réalisée dans un support en polycarbonate et comprend un microactionneur 1 analogue à celui décrit au paragraphe relatif à la figure 1 et situé à proximité d'un microcircuit de fluide. A proximité immédiate dudit microactionneur 1 et plus particulièrement de sa membrane 4, est placée une lamelle 21 flexible en polycarbonate solidaire du support fait du même matériau. En se référant à la figure 5, la lamelle flexible 21 est une pièce plate d'épaisseur constante, présentant un corps arrondi 22 prolongé par une partie 23 plus étroite ayant une extrémité arrondie. La lamelle 21 est solidaire du support par l'intermédiaire d'une languette 24, de plus faible épaisseur, reliant ledit support à l'extrémité du corps arrondi 22 de la lamelle 21, la plus éloignée de l'extrémité arrondie de la partie 23 plus étroite qui la prolonge. L'extrémité arrondie de ladite partie étroite 23 porte une protubérance 25 souple de forme approximativement hémisphérique, la dite protubérance 25 obturant une canalisation 26. L'effort nécessaire au maintien de l'étanchéité, même en cas de contrepression due au fluide de la canalisation 26, est obtenu par une flexion initiale de la lamelle 21.

Le mode de fonctionnement de cette microvanne 20 d'ouverture est le suivant. La mise à feu de la charge pyrotechnique 6 entraîne une surpression dans la chambre 2 qui provoque alors le gonflement de la membrane 4 qui vient en appui contre la lamelle 21 flexible. Les forces de pression exercées sur ladite lamelle 21 provoquent son pivotement autour de la languette 24 qui la relie au support, permettant l'ouverture de la canalisation 26 initialement obturée par la protubérance 25 de ladite lamelle 21. Durant son déplacement, la lamelle 21 demeure rigide sans se déformer et joue donc le rôle d'un clapet pivotant.

En se référant à la figure 6 un modèle de microvanne 30 de fermeture comprend une chambre 31 usinée dans un support 32 en polycarbonate et ayant une forme cylindrique. Ladite chambre 31 qui est donc délimitée par le support 32 présente une face circulaire obturée par une membrane 33 bistable ayant une forme concave et possédant en son centre, sur sa surface externe par rapport à la chambre 31, une protubérance 34 souple de forme hémisphérique. La face de la chambre 31 opposée à celle délimitée par la membrane 33, possède un évidement 35 cylindrique central, ladite face étant recouverte par une piste conductrice 36. Une charge pyrotechnique 37 de faible épaisseur et de longueur inférieure au diamètre de l'évidement 35 est déposée sur la surface de ladite piste 36, dans une position opposée à celle dudit évidement 35 par rapport à la piste 36. La membrane 33 délimite partiellement une circulation de fluide.

Le mode de fonctionnement de ce type de microvanne 30 de fermeture est le suivant.

La mise à feu de la charge pyrotechnique 37 induit une surpression dans la chambre 31 qui entraîne le retournement de la membrane 33 qui adopte aussitôt une forme convexe, accroissant significativement le volume de ladite chambre 31. La protubérance 34 vient s'encastrer dans une canalisation de fluide 38 interrompant la circulation de fluide. La nouvelle forme convexe de la membrane 33 étant stable, la fermeture de la canalisation 38 demeure permanente.

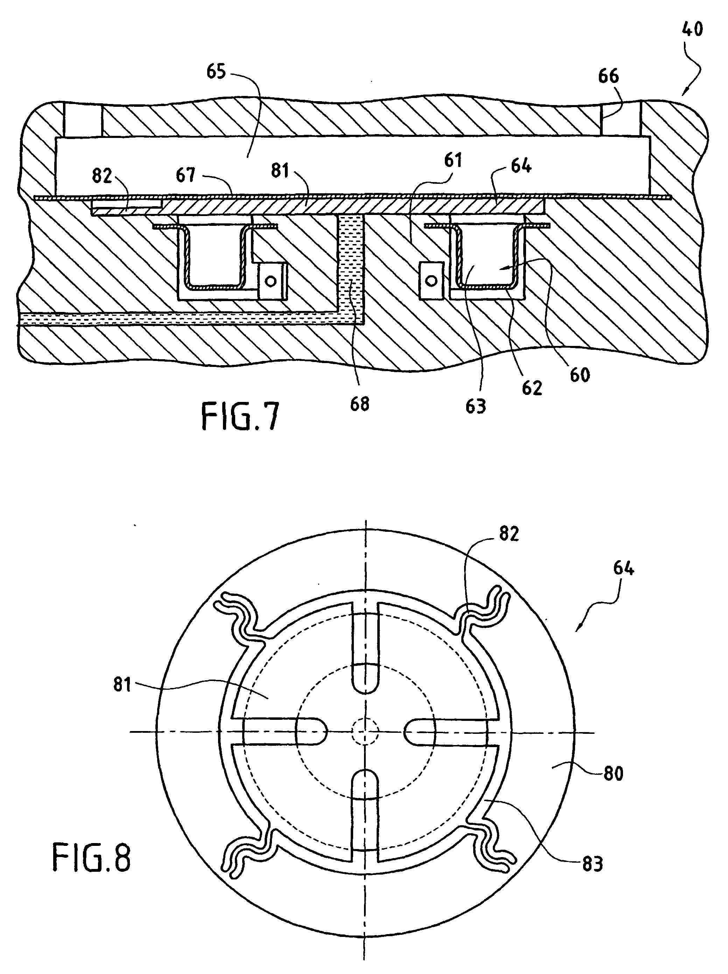

En se référant à la figure 7, une micropompe 40 à dépression comprend un microactionneur 60 selon l'invention, usiné dans un support 61 en polycarbonate et comportant une membrane souple 62 située dans un espace annulaire 63 assimilable à une gorge. De façon plus précise, ladite membrane 62 tapisse le fond de la gorge 63 en étant fixée à ladite gorge 63 au niveau de sa partie supérieure. Une charge pyrotechnique est située dans un espace annulaire assimilable à une gorge de plus petite dimension que celle 63 dans laquelle est située la membrane 62 et positionnée par rapport à celle-ci 63 de façon concentrique, les deux gorges communiquant entre elles par quatre ouvertures régulièrement espacées sur une paroi circulaire séparant les deux gorges. La gorge enfermant la charge pyrotechnique est enfouie dans le support 61 alors que la gorge 63 qui est tapissée par la membrane 62 souple est ouverte à sa partie supérieure. Une feuille 64 du support 61 en polycarbonate coiffe ladite gorge 63. En se référant à la figure 8, ladite feuille 64 est découpée de sorte qu'elle est constituée par une bande annulaire 80 plate, périphérique, reliée à un disque plat central 81 au moyen de quatre brins déformables 82 en forme de S. Le disque central 81 recouvre intégralement la gorge annulaire 63. Entre ledit disque plat central 81 et la bande annulaire périphérique 80 subsiste un espace annulaire vide 83. De l'autre côté de la feuille 64 est ménagé, dans le support 61, un espace libre 65 cylindrique dont le diamètre est supérieur à celui de ladite feuille 64, ledit espace 65 possédant deux évents 66. La feuille 64 est recouverte d'une membrane élastique 67, de forme circulaire, et de diamètre supérieur à celui de l'espace libre 65 situé au delà de ladite feuille 64. Ladite membrane élastique 67 est fixée dans ledit espace libre 65, dans sa partie la plus proche de la feuille 64. Une canalisation 68 de fluide, creusée dans le support 61 au niveau de la partie centrale de la gorge contenant la charge pyrotechnique, débouche dans l'espace libre 65 dudit support 61.

Le mode de fonctionnement de ce type de micropompe à dépression est le suivant. En se référant aux figures 7, 8 et 9, la combustion de la charge pyrotechnique engendre des gaz qui envahissent, par les quatre ouvertures, la gorge 63 externe tapissée par la membrane souple 62 qui, aussitôt, entame une phase de retournement pour finir par émerger de ladite gorge 63 dans laquelle elle se trouvait, sous la forme d'un bourrelet pneumatique 69. La formation de ce bourrelet 69 entraîne le déplacement du disque 81 de la feuille 64. Le déplacement dudit disque 81 est rendu possible grâce aux quatre brins déformables 82 en forme de S qui se tendent sans se rompre pour maintenir une liaison avec la bande annulaire 80. Ledit déplacement induit une aspiration de fluide dans l'espace que la membrane élastique 67 crée en s'éloignant du support 61. La membrane élastique 67 assure une bonne étanchéité de l'espace dans lequel est aspiré le fluide. L'air de l'espace situé derrière la membrane élastique 67 s'évacue par les deux évents 66 de l'espace libre 65 dont le volume ne cesse de décroître.

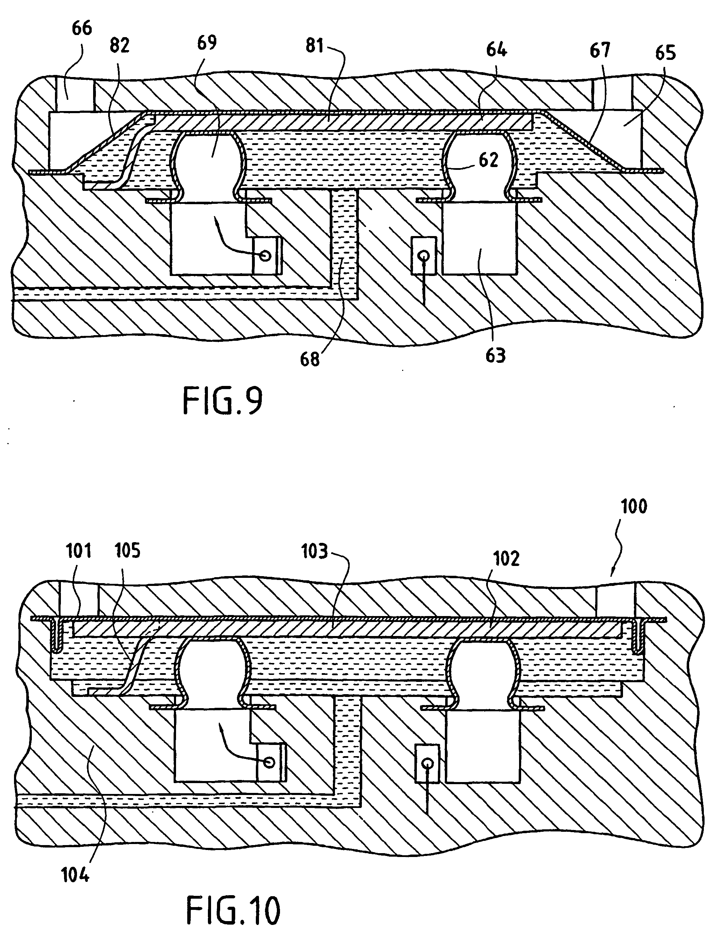

En se référant à la figure 10, une seconde variante de réalisation d'une micropompe 100 utilisant un microactionneur selon l'invention ne diffère de la micropompe décrite ci-avant qu'au niveau de la feuille 102 et de la membrane 101 qui la recouvre. En effet, la feuille 102 se présente sous la forme d'un disque plat 103 élargi dont le diamètre est sensiblement égal à l'espace libre cylindrique correspondant à celui désigné par le repère 65 sur la figure 7 et situé de l'autre côté de ladite feuille 102. Ledit disque 103 est relié au support 104 au moyen de quatre brins déformables 105 en forme de S. De cette manière, la membrane 101 qui recouvre la feuille 102 est fixée dans ledit espace libre cylindrique, de sorte qu'elle tapisse intégralement ledit espace, aussi bien le fond que la paroi latérale interne. Ladite membrane 101 est fixée dans ledit espace au niveau de sa paroi latérale interne à sa partie la plus éloignée de ladite feuille 102. Le principe de fonctionnement d'une telle micropompe 100 est analogue à celui décrit pour la première variante. L'avantage technique octroyé par une telle configuration est un gain de volume de l'espace dans lequel est aspiré le fluide, puisque cet espace est sensiblement celui qui existe au-delà de la feuille 102 avant que le microactionneur n'ait fonctionné.

## Revendications

1. Microactionneur (1,60) comprenant une chambre (2,63) réalisée sous forme d'une cavité dans un support solide (3) et contenant une charge pyrotechnique (6), ladite chambre (2,63) étant délimitée partiellement par une membrane (4,62) déformable, de sorte que les gaz émis par la combustion de la charge pyrotechnique (6) permettent d'accroître le volume de ladite chambre (2,63) par déformation de ladite membrane (4,62), tout en maintenant intactes les parois solides de la chambre (2,63), **caractérise en ce que** la charge pyrotechnique (6) est déposée sur un conducteur chauffant et a une épaisseur de dépôt inférieure à 200µm.

2. Microactionneur selon la revendication 1, **caractérisé en ce que** la chambre (2, G3) comporte une cavité creusée dans le support (3) et la charge pyrotechnique (6) se présente sous la forme d'un film recouvrant ladite cavité.

3. Microactionneur selon la revendication 1 **caractérisé en ce que** la chambre (2,G3) définit un espace hermétique une fois qu'elle s'est expansée.

4. Microactionneur selon la revendication 1 **caractérisé en ce que** la charge pyrotechnique (6) est constituée par une composition à base de nitrocellulose.

5. microactionneur selon la revendication 1 **caractérisé en ce que** le volume de la chambre (2,63) est inférieur à 1cm³.

6. Microactionneur selon l'une quelconque des revendications 1 ou 5 **caractérisé en ce que** la densité de chargement qui est le rapport de la masse de la charge pyrotechnique (6) sur le volume de la chambre (2,63) est compris entre 0,01 µg/mm³ et 0,1 mg/mm³.

7. Microactionneur selon la revendication 1 **caractérisé en ce que** la chambre (2) est délimitée partiellement par une membrane souple (4) susceptible de se gonfler sous l'effet des gaz émis par la charge pyrotechnique (6).

8. Microactionneur selon la revendication 1 **caractérisé en ce que** la chambre (63) est délimitée partiellement par une membrane souple repliée (62) dans ladite chambre (63), ladite membrane (63) étant apte à se déplier sous l'effet des gaz émis par la charge pyrotechnique (6).

9. Microactionneur selon l'une quelconque des revendications 7 ou 8 **caractérisé en ce que** la membrane (4,62) est en téflon.

10. microactionneur selon la revendication 1 **caractérisé en ce que** la charge pyrotechnique (6) enrobe un fil conducteur (5) chauffant, traversant la chambre (2), le diamètre dudit fil (5) étant compris entre 10 µm et 100 µm.

11. Microsystème incluant un microactionneur (1,60) conforme à l'une quelconque des revendications 1 à 10 **caractérisé en ce que** la déformation de la membrane (4,62) provoque le déplacement d'une pièce solide (15,21,64).

12. Microsystème selon la revendication 11 **caractérisé en ce que** la pièce solide (15) pivote sous l'effet des gaz de combustion et vient obstruer une canalisation de fluide (12).

13. Microsystème incluant un microactionneur (60) conforme à l'une quelconque des revendications 1,2,3,4,5,6,8, 9 ou 10 **caractérisé en ce que**,
i) une membrane souple (G2) est située dans un espace annulaire (63) assimilable à une gorge,
ii) la charge pyrotechnique est située dans une espace annulaire assimilable à une gorge de plus petite dimension que celle dans laquelle est située la membrane souple (62) et positionnée de façon concentrique par rapport à celle-ci, les deux gorges communiquant entre elles par au moins une ouverture,
iii) une pièce solide plate (64) vient en appui contre le support (61) en coiffant l'espace annulaire (63) dans lequel est situé la membrane souple (62), ladite pièce (64) étant elle-même recouverte par une membrane élastique (67) et obstruant une canalisation de fluide (68),
de sorte que les gaz émis par la combustion de la charge entraînent le déploiement de la membrane souple (62) située dans l'espace annulaire (G3) et provoquent le déplacement de la pièce plate (64), en induisant une aspiration de fluide dans l'espace que la membrane élastique (67) crée en s'éloignant du support (61).

14. Microsystème incluant un microactionneur conforme à l'une quelconque des revendications 1,2,3,4,5,6,7,8, 9 ou 10 **caractérisé en ce que** la membrane (4) se déforme sous l'effet des gaz de combustion pour venir obturer une canalisation de fluide.

15. Microsystème selon la revendication 14 **caractérisé en ce que** la chambre (31) est partiellement délimitée par une membrane bistable (33), de sorte que ladite membrane (33) initialement concave, devient convexe sous l'effet des émis par la charge (37).

16. Microsystème selon l'une quelconque des revendications 12 ou 14 **caractérisé en ce que** l'élément 15,31) qui vient obstruer la canalisation (12,38) de fluide est surmonté d'une protubérance (16,34) souple pour assurer une bonne étanchéité au niveau de la fermeture de ladite canalisation (12,38).

## Patentansprüche

1. Mikrostellglied (1, 60) mit einer Kammer (2, 63), die in Form eines Hohlraums in einem festen Träger (3) hergestellt ist und eine pyrotechnische Ladung (6) enthält, wobei die Kammer (2, 63) teilweise von einer verformbaren Membran (4, 62) begrenzt wird, so dass die durch die Verbrennung der pyrotechnischen Ladung (6) emittierten Gase es ermöglichen, das Volumen der Kammer (2, 63) durch Verformung der Membran (4, 62) zu vergrößern, wobei die festen Wände der Kammer (2, 63) unversehrt gehalten werden, **dadurch gekennzeichnet, dass** die pyrotechnische Ladung (6) auf einen Heizleiter aufgebracht wird und eine Schichtdicke von weniger als 200 µm hat.

2. Mikrostellglied nach Anspruch 1, **dadurch gekennzeichnet, dass** die Kammer (2, 63) einen Hohlraum aufweist, der im Träger (3) ausgehöhlt ist, und die pyrotechnische Ladung (6) in Form einer dünnen Schicht vorliegt, die den Hohlraum bedeckt.

3. Mikrostellglied nach Anspruch 1, **dadurch gekennzeichnet, dass** die Kammer (2, 63) einen hermetisch verschlossenen Raum definiert, wenn sie expandiert ist.

4. Mikrostellglied nach Anspruch 1, **dadurch gekennzeichnet, dass** die pyrotechnische Ladung (6) aus einer Zusammensetzung auf der Basis von Nitrocellulose besteht.

5. Mikrostellglied nach Anspruch 1, **dadurch gekennzeichnet, dass** das Volumen der Kammer (2, 63) unter 1 m³ liegt.

6. Mikrostellglied nach einem der Ansprüche 1 oder 5, **dadurch gekennzeichnet, dass** die Ladungsdichte, die das Verhältnis zwischen der Masse der pyrotechnischen Ladung (6) und dem Volumen der Kammer (2, 63) ist; zwischen 0,01 µg/mm³ und 0,1 mg/ mm³ liegt.

7. Mikrostellglied nach Anspruch 1, **dadurch gekennzeichnet, dass** die Kammer (2) teilweise von einer geschmeidigen Membran (4) begrenzt wird, die sich unter der Wirkung der von der pyrotechnischen Ladung (6) emittierten Gase ausdehnen kann.

8. Mikrostellglied nach Anspruch 1, **dadurch gekennzeichnet, dass** die Kammer (63) teilweise von einer geschmeidigen gefalteten Membran (62) in der Kammer (63) begrenzt wird, wobei die Membran (63) in der Lage ist, sich unter der Wirkung der von der pyrotechnischen Ladung (6) emittierten Gase zu entfalten.

9. Mikrostellglied nach einem der Ansprüche 7 oder 8, **dadurch gekennzeichnet, dass** die Membran (4, 62) aus Teflon ist.

10. Mikrostellglied nach Anspruch 1, **dadurch gekennzeichnet, dass** die pyrotechnische Ladung (6) einen Heizleitungsdraht (5) umhüllt, der die Kammer (2) durchquert, wobei der Durchmesser des Drahts (5) zwischen 10 µm und 100 µm liegt.

11. Mikrosystem, das ein Mikrostellglied (1, 60) gemäß einem der Ansprüche 1 bis 10 aufweist, **dadurch gekennzeichnet, dass** die Verformung der Membran (4, 62) die Verschiebung eines festen Bauteils (15, 21, 64) bewirkt.

12. Mikrosystem nach Anspruch 11, **dadurch gekennzeichnet, dass** das feste Bauteil (15) unter der Wirkung der Verbrennungsgase schwenkt und eine Fluidleitung (12) verschließt.

13. Mikrosystem, das ein Mikrostellglied (60) gemäß einem der Ansprüche 1, 2, 3, 4, 5, 6, 8, 9 oder 10 enthält, **dadurch gekennzeichnet, dass**
i) eine geschmeidige Membran (62) sich in einem einer Kehle vergleichbaren Ringraum (63) befindet,
ii) die pyrotechnische Ladung sich in einem einer Kehle vergleichbaren Ringraum befindet, der kleiner ist als derjenige, in dem sich die geschmeidige Membran (62) befindet und der zu diesem konzentrisch angeordnet ist, wobei die beiden Kehlen über mindestens eine Öffnung miteinander in Verbindung stehen,
iii) ein festes flaches Bauteil (64) gegen den Träger (61) in Anlage kommt, indem es den Ringraum (63) überdeckt, in dem sich die geschmeidige Membran (62) befindet, wobei das Bauteil (64) selbst von einer elastischen Membran (67) bedeckt ist, die eine Fluidleitung (68) verschließt,
so dass die durch die Verbrennung der Ladung emittierten Gase das Entfalten der geschmeidigen Membran (62) bewirken, die sich im Ringraum (63) befindet, und die Verschiebung des flachen Bauteils (64) hervorrufen, indem sie ein Ansaugen von Fluid in den Raum erzeugen, den die elastische Membran (67) erzeugt, indem sie sich vom Träger (61) entfernt.

14. Mikrosystem, das ein Mikrostellglied nach einem der Ansprüche 1, 2, 3, 4, 5, 6, 7, 8, 9, oder 10 enthält, **dadurch gekennzeichnet, dass** die Membran (4) sich unter der Wirkung der Verbrennungsgase verformt, um eine Fluidleitung zu verschließen.

15. Mikrosystem nach Anspruch 14, **dadurch gekennzeichnet, dass** die Kammer (31) teilweise von einer bistabilen Membran (33) begrenzt wird, so dass die ursprüngliche konkave Membran (33) unter der Wirkung der von der Ladung (37) emittierten Gase konvex wird.

16. Mikrosystem nach einem der Ansprüche 12 oder 14, **dadurch gekennzeichnet, dass** über dem Element (15, 31), das die Fluidleitung (12, 38) verschließt, eine geschmeidige Ausstülpung (16, 34) sitzt, um eine gute Dichtheit in Höhe des Verschlusses der Leitung (12, 38) zu gewährleisten.

## Claims

1. Microactuator (1, 60) comprising a chamber (2, 63) made in the form of a cavity in a solid support (3) and containing a pyrotechnic charge (6), the said chamber (2, 63) being partially delimited by a deformable membrane (4, 62), so that the gases emitted by combustion of the pyrotechnic charge (6) enable the volume of the said chamber (2, 63) to be increased by deformation of the said membrane (4, 62), while the solid walls of the chamber (2, 63) are kept intact, **characterized in that** the pyrotechnic charge (6) is deposited on a heating conductor at a thickness of less than 200 µm.

2. Microactuator according to claim 1, **characterized in that** the chamber (2, 63) comprises a cavity hollowed out in the support (3) and the pyrotechnic charge (6) is in the form of a film covering the said cavity.

3. Microactuator according to claim 1, **characterized in that** the chamber (2, 63) defines a sealed space once it is expanded.

4. Microactuator according to claim 1, **characterized in that** the pyrotechnic charge (6) consists of a composition based on nitrocellulose.

5. Microactuator according to claim 1, **characterized in that** the volume of the chamber (2, 63) is less than 1 cm³.

6. Microactuator according to either of claims 1 or 5, **characterized in that** the density of charge which is the ratio of the mass of pyrotechnic charge (6) to the volume of the chamber (2, 63) lies between 0.01 µg/mm³ and 0.1 mg/mm³.

7. Microactuator according to claim 1, **characterized in that** the chamber (2) is partially delimited by a flexible membrane (4) that is capable of inflating under the effect of the gases emitted by the pyrotechnic charge (6).

8. Microactuator according to claim 1, **characterized in that** the chamber (63) is partially delimited by a folded flexible membrane (62) in the said chamber (63), the said membrane (62) being capable of unfolding under the effect of the gases emitted by the pyrotechnic charge (6).

9. Microactuator according to either claim 7 or 8, **characterized in that** the membrane (4, 62) is made of teflon.

10. Microactuator according to claim 1, **characterized in that** the pyrotechnic charge (6) covers a heating conducting wire (5), passing through the chamber (2), the diameter of the said wire (5) being between 10 µm and 100 µm.

11. Microsystem including a microactuator (1, 60) in accordance with any one of claims 1 to 10, **characterized in that** deformation of the membrane (4, 62) brings about the displacement of a solid part (15, 21, 64).

12. Microsystem according to claim 11, **characterized in that** the solid part (15) pivots under the effect of the combustion gases and obstructs a fluid passageway (12).

13. Microsystem including a microactuator (60) according to any one of claims 1, 2, 3, 4, 5, 6, 8, 9 or 10,
**characterized in that**
i) a flexible membrane (62) is situated in an annular space (63) similar to a groove,
ii) the pyrotechnic charge is situated in a an annular space (63) similar to a groove of a smaller size than that in which the flexible membrane (62) is positioned, concentrically with respect to the latter, the two grooves communicating between each other through at least one opening,
iii) a flat solid part (64) rests against the support (61) in which the flexible membrane (62) is situated, the said part (64) being itself covered by an elastic membrane (67) and obstructing a fluid passageway (68),
so that the gases emitted by the combustion of the charge bringing about the deployment of the flexible membrane (62) situated in the annular space (63) and bringing about the displacement of the flat part (64), while inducing aspiration of fluid in the space that the elastic (67) creates by moving away from the support (61).

14. Microsystem including a microactuator according to any one of claims 1, 2, 3, 4, 5, 6, 8, 9 or 10, **characterized in that** the membrane (4) is deformed under the effect of the combustion gases so as to close off a fluid passageway.

15. Microsystem according to claim 14, **characterized in that** the chamber (31) is partially delimited by a bistable membrane (33), so that the said membrane (33) that is initially concave, becomes convex under the effect of the gases emitted by the charge.

16. Microsystem according to either claim 12 or 14, **characterized in that** the element (15, 31) which obstructs the fluid passageway (12, 38) is surmounted by a flexible protuberance (16, 34) so as to ensure a good seal in the region where the said passageway (12, 38) is closed.
